# EUROPÄISCHE PATENTSCHRIFT

(11) **EP 3 894 811 B1**
(45) Veröffentlichungstag und Bekanntmachung des Hinweises auf die Patenterteilung: **04.12.2024**
(21) Anmeldenummer: 19820686.4
(22) Anmeldetag: 06.12.2019
(51) Int. Cl.: G01J 3/12, G01J 3/02, G01J 3/26, G01J 3/32

(54) **SPEKTROMETERVORRICHTUNG UND VERFAHREN ZUM HERSTELLEN EINER SPEKTROMETERVORRICHTUNG**
SPECTROMETER DEVICE AND METHOD FOR PRODUCING A SPECTROMETER DEVICE
DISPOSITIF DE SPECTROMÉTRIE ET PROCÉDÉ DE FABRICATION D'UN DISPOSITIF DE SPECTROMÉTRIE

(30) Priorität: 12.12.2018 DE 102018221522
(43) Veröffentlichungstag der Anmeldung: 20.10.2021
(73) Patentinhaber: Robert Bosch GmbH, 70442 Stuttgart (DE)
(72) Erfinder: NOLTEMEYER, Ralf, 71083 Herrenberg (DE); HUSNIK, Martin, 70176 Stuttgart (DE); BAUMGART, Eugen, 75385 Bad Teinach-Zavelstein (DE); SCHMID, Marc, 70565 Stuttgart (DE); ROEDEL, Reinhold, 72760 Reutlingen (DE); STEIN, Benedikt, 70193 Stuttgart (DE); SCHELLING, Christoph, 70619 Stuttgart (DE); KRAEMMER, Christoph Daniel, 76137 Karlsruhe (DE)
(86) Internationale Anmeldenummer: PCT/EP2019/083923
(87) Internationale Veröffentlichungsnummer: WO 2020/120296

(56) Entgegenhaltungen:
- WO-A1-2018/159533
- US-A- 5 225 888
- US-A1- 2010 302 535
- MARTIN EBERMANN ET AL: "Aufbau und Betrieb eines Infrarot-Mikrospektrometers auf der Basis eines MEMS-FP-Filters", TM - TECHNISCHES MESSEN/PLATTFORM FÜR METHODEN, SYSTEME UND ANWENDUNGEN DER MESSTECHNIK, vol. 77, no. 6, 1 January 2010 (2010-01-01), DE, XP055672668, ISSN: 0171-8096, DOI: 10.1524/teme.2010.0021

## Beschreibung

Die vorliegende Erfindung betrifft eine Spektrometervorrichtung und ein Verfahren zum Herstellen einer Spektrometervorrichtung. Insbesondere betrifft die vorliegende Erfindung eine als Fabry-Pérot-Interferometer ausgestaltete Spektrometervorrichtung.

### Stand der Technik

Optische Spektrometer dienen der Analyse von Lichtstrahlen durch Untersuchung des Spektrums. Aus der DE 196 81 285 T1 ist ein Zusatzgerät für Infrarot-Mikrospektrometer bekannt. Insbesondere ist dort ein Innenreflexionselement offenbart, welches die Notwendigkeit zur Steuerung des Winkels der einfallenden Strahlung durch die optische Ausführung des Objektivs reduziert. Die DE 10 2005 055 860 B3 offenbart eine Gassensoranordnung mit einem Hohlspiegel, welcher durch eine reflektierende Innenwandung des Gehäuses gebildet ist, und eine gesteigerte Lichtausbeute sicherstellt.

Die Spektralanteile des Lichtstrahls können mittels Interferometer und einer Detektionseinrichtung bestimmt werden. Die hierbei verwendeten optischen Interferenzfilter weisen Transmissionseigenschaften auf, die einfallswinkelabhängig sind. Insbesondere hängt die transmittierte Zentralwellenlänge von dem Einfallswinkel des Lichtstrahls ab. Je größer der Einfallswinkel des Lichtstrahls gegenüber der Senkrechten ist, desto mehr verschiebt sich die transmittierte Zentralwellenlänge. Für eine gute Auflösung bzw. Halbwertsbreite des durch das spektrale Element transmittierten Lichts ist daher eine Beschränkung des von dem Detektor erfassbaren Winkelbereichs notwendig. Eine mögliche Beschränkung des Winkelbereichs kann mithilfe einer Apertur erfolgen, wie aus der WO 17057372 A1 bekannt. Alternativ können Linsen verwendet werden, welche Lichtstrahlen mit demselben Einfallswinkel auf die gleiche Position in der fokalen Ebene abbilden. Durch geeignete Wahl der Größe des Detektors wird lediglich Licht aus einem gewünschten Einfallswinkelintervall detektiert. Eine derartige Anordnung ist aus der US 2016/0112776 A1 bekannt.

Die US 2010/0302535 offenbart eine Spektrometervorrichtung mit einem optischen Interferenzfilter und einer Fokussiereinrichtung, die eine reflektierende Oberfläche aufweist, wobei die Fokussiereinrichtung dazu ausgebildet ist, den gefilterten Lichtstrahl durch Reflexion an der Oberfläche auf einen Punkt zu fokussieren.

Das Dokument Martin Ebennann et al.: "Aufbau und Betrieb eines Infrarot-Mikrospektrometers auf der Basis eines MEMS-FP-Filters", tm-Technisches Messen/Plattform für Methoden, Systeme und Anwendungen der Messtechnik, Bd. 77, Nr. 6, 1. Januar 2010 offenbart eine Spektrometervorrichtung mit einer Lichtquelle, einer Probenkammer, einem optischen Interferenzfilter, einer Detektoreinrichtung und einer Fokussiereinrichtung. Von der Lichtquelle emittiertes Licht durchläuft die Probenkammer, trifft auf die Fokussiereinrichtung, durchläuft die Probenkammer erneut, passiert dann das in die Detektoreinrichtung integrierten, optischen Interferenzfilter und trifft schließlich auf die Detektoreinrichtung. Das Licht wird dabei durch die Fokussiereinrichtung auf die Detektoreinrichtung und damit auf das darin integrierte Interferenzfilter fokussiert.

Die US 5 225 888 offenbart eine Spektrometervorrichtung zur Erfassung von Spuren von Bestandteilen eines Plasmas. Dabei werden Lichtemissionen aus einer Bearbeitungskammer durch eine Linse kollimiert und an ein Interferometer geleitet, das selektiv bestimmte Wellenlängen des Lichts durchlässt, die charakteristisch für die Anregungsemissionen bestimmter Atome sind. Die Lichtintensität ausgewählter Wellenlängen wird von einer Photomultiplier-Röhre erfasst. Das Interferometer kann als ein Interferometer vom Fabry-Perot-Typ ausgebildet sein. Weiterer Stand der Technik ist in WO2018159533 offenbart.

### Offenbarung der Erfindung

Die Erfindung stellt eine Spektrometervorrichtung mit den Merkmalen des Patentanspruchs 1 und ein Verfahren zum Herstellen dieser Spektrometervorrichtung mit den Merkmalen des Patentanspruchs 8 bereit. Bevorzugte Ausführungsformen sind Gegenstand der jeweiligen Unteransprüche.

Gemäß einem ersten Aspekt betrifft die Erfindung demnach eine Spektrometervorrichtung mit einem optischen Interferenzfilter, einer Detektoreinrichtung und einer Fokussiereinrichtung. Das optische Interferenzfilter umfasst zwei relativ zueinander beabstandete und relativ zueinander aktuierbare Spiegel und ist dazu ausgebildet, bestimmte Wellenlängenbereiche eines einfallenden Lichtstrahls beim Durchgang durch das optische Interferenzfilter zu filtern. Die Detektoreinrichtung ist dazu ausgebildet, den gefilterten Lichtstrahl zu detektieren und auf einer Lichtaustrittsseite des optischen Interferenzfilters, auf welcher der Lichtstrahl nach dem Durchgang durch das Interferenzfilter austritt, in das optische Interferenzfilter integriert. Die Detektoreinrichtung kann auch direkt an dem optischen Interferenzfilter angeordnet sein. Schließlich kann die Detektoreinrichtung mittelbar an dem Interferenzfilter angeordnet sein, wobei beispielweise zusätzliche Schichten zwischen Detektoreinrichtung und Interferenzfilter ausgebildet sein können. Die Fokussiereinrichtung weist eine reflektierende Oberfläche auf und ist dazu ausgebildet, den gefilterten Lichtstrahl durch Reflexion an der Oberfläche auf die Detektoreinrichtung zu fokussieren. Die Spektrometervorrichtung weist weiter eine Trägereinrichtung auf. Das optische Interferenzfilter, die Detektoreinrichtung und die Fokussiereinrichtung sind direkt oder mittelbar an der Trägereinrichtung angeordnet. Insbesondere können das optische Interferenzfilter und die Fokussiereinrichtung direkt an der Trägereinrichtung angeordnet sein. Weiter können die elektrischen Verbindungen bzw. Verdrahtungen des optischen Interferenzfilters, der Detektoreinrichtung und der Fokussiereinrichtung auf der Trägereinrichtung angeordnet oder zumindest teilweise in diese integriert sein.

Gemäß einem zweiten Aspekt betrifft die Erfindung demnach ein Verfahren zum Herstellen einer Spektrometervorrichtung. Ein optisches Interferenzfilter wird bereitgestellt, welches dazu ausgebildet ist, bestimmte Wellenlängenbereiche eines einfallenden Lichtstrahls beim Durchgang durch das optische Interferenzfilter zu filtern.

Weiter wird eine Detektoreinrichtung bereitgestellt, welche dazu ausgebildet ist, den gefilterten Lichtstrahl zu detektieren. Schließlich wird eine Fokussiereinrichtung bereitgestellt, welche eine reflektierende Oberfläche aufweist. Die Fokussiereinrichtung, die Detektoreinrichtung und das optische Interferenzfilter werden derart zueinander angeordnet, dass die Fokussiereinrichtung den gefilterten Lichtstrahl auf die Detektoreinrichtung fokussiert.

### Vorteile der Erfindung

Die erfindungsgemäße Spektrometervorrichtung zeichnet sich dadurch aus, dass sie sehr kompakt gebaut werden kann, d.h. eine sehr geringe Bauhöhe aufweisen kann. Grund ist, dass auf zusätzliche Linsenelemente verzichtet werden kann und die Fokussierung des gefilterten Lichtstrahls durch die reflektierende Oberfläche der Fokussiereinrichtung erfolgt, welche mit geringer Bauhöhe bzw. einer geringen Bauhöhe bei großer Eingangsapertur ausgestaltet werden kann. Weiter kann ein optisches Interferenzfilter mit großer Eingangsapertur bei guter Einfallswinkellimitierung genutzt werden. Insgesamt kann dadurch eine hohe Lichteffizienz und ein gutes Signal-zu-Rausch-Verhältnis der Spektrometervorrichtung erreicht werden. Aufgrund der verbesserten Winkeleinschränkung, d.h. der Limitierung des detektierten Einfallwinkelbereichs kann auch eine hohe Auflösung erreicht werden.

Ein weiterer Vorteil der Verwendung einer reflektierenden Oberfläche gegenüber der Verwendung einer Linse besteht in der praktisch zu vernachlässigenden chromatischen Aberration von reflektierenden Oberflächen, etwa von Metallspiegeln. Dadurch ist es möglich, die Einschränkung des Einfallswinkels mit hoher Qualität über einen breiten Wellenlängenbereich zu gewährleisten. Weiter ist die Absorption von reflektierenden Oberflächen deutlich geringer als die Absorption von Linsenelementen, welche in bestimmten Wellenlängenbereichen je nach Linsenmaterial signifikant sein kann. Dadurch kann durch die Verwendung von reflektierenden Oberflächen möglichst viel Licht detektiert werden.

Weiter sind die verwendeten Komponenten der Spektrometervorrichtung mit geringem Justageaufwand zusammenzufügen, sodass die Herstellungskosten gering gehalten werden können.

Schließlich ist es möglich, eine kleine und kostengünstige Detektoreinrichtung zu verwenden, ohne dass die Lichtausbeute verringert wird. Trotz der hohen Lichteffizienz können somit gleichzeitig die Kosten gesenkt werden.

Im Gegensatz zu einer Verwendung von Linsen kommt die erfindungsgemäße Spektrometervorrichtung mit einer geringeren Anzahl von Grenzflächen aus, welche der Lichtstrahl passiert, bevor er von der Detektoreinrichtung erfasst wird. Möglicherweise auftretende Reflexionsverluste werden dadurch verringert.

Gemäß einer bevorzugten Weiterbildung der Spektrometervorrichtung überlappt die Detektoreinrichtung zumindest teilweise mit einer durch ein Zentrum des optischen Interferenzfilters verlaufenden Achse. Die Spektrometervorrichtung kann beispielsweise einen kreisförmigen oder quadratischen Querschnitt aufweisen und die Detektoreinrichtung ist an einer Position entlang der Achse durch das Zentrum des kreisförmigen oder quadratischen Querschnitts angeordnet. Die Detektoreinrichtung und das Interferenzfilter sind symmetrisch aufgebaut, sodass auch die Fokussiereinrichtung symmetrisch aufgebaut sein kann. Die Fokussiereinrichtung kann etwa die Form eines symmetrisch zu der Achse ausgestalteten Parabolspiegels aufweisen, welcher die Lichtstrahlen auf die entlang der Achse angeordnete Detektoreinrichtung fokussiert.

Erfindungsgemäss ist die Detektoreinrichtung auf der Lichtaustrittsseite des optischen Interferenzfilters direkt an dem optischen Interferenzfilter angeordnet, d.h. mittelbar an der Trägereinrichtung oder auf der Lichtaustrittsseite des optischen Interferenzfilters benachbart zu dem Interferenzfilter an der Trägereinrichtung angeordnet. Dadurch können Abschattungen durch die Detektoreinrichtung vermieden werden.

Gemäß einer bevorzugten Weiterbildung der Spektrometervorrichtung umfasst die Trägereinrichtung mindestens ein Beabstandungselement, welches die Fokussiereinrichtung mit dem optischen Interferenzfilter verbindet und die Fokussiereinrichtung und das optische Interferenzfilter voneinander beabstandet. Das mindestens eine Beabstandungselement weist zumindest bereichsweise eine vorzugsweise breitbandig absorbierende Beschichtung auf. Durch die absorbierende Beschichtung wird mögliche Quer- oder Rückstrahlung verhindert und dadurch das Signal-zu-Rausch-Verhältnis verbessert.

Gemäß einer bevorzugten Weiterbildung der Spektrometervorrichtung weist ein der Detektoreinrichtung benachbarter Oberflächenabschnitt des optischen Interferenzfilters und/oder der Trägereinrichtung zumindest bereichsweise eine vorzugsweise breitbandige absorbierende Beschichtung auf. Alternativ oder zusätzlich kann ein Oberflächenabschnitt der Detektoreinrichtung eine absorbierende Beschichtung aufweisen. Insbesondere kann die Detektoreinrichtung einen typischerweise zentral angeordneten aktiven Bereich aufweisen, welcher zur Detektion ausgebildet ist, sowie einen diesen Bereich umgebenden inaktiven Randbereich, welcher vollständig oder zumindest teilweise die absorbierende Beschichtung aufweisen kann. Die absorbierende Beschichtung dient ebenfalls der Verringerung von Quer- und Rückstrahlung. Weiter werden Lichtstrahlen, die unter einem größeren Einfallswinkel durch das Interferenzfilter durchgehen und von der Fokussiereinrichtung nicht auf die Detektoreinrichtung fokussiert werden, d.h. außerhalb des Erfassungsbereichs der Spektrometervorrichtung liegen, von der absorbierenden Beschichtung absorbiert. Dadurch kann ein schmaler und wohldefinierter Einfallswinkelbereich von der Spektrometervorrichtung erfasst werden.

Gemäß einer bevorzugten Weiterbildung der Spektrometervorrichtung weist die Detektoreinrichtung einen Ringdetektor, segmentierte Detektorelemente und/oder arrayförmig angeordnete Detektorelemente auf. Dadurch ist es möglich, verschiedene Winkelintervalle oder unterschiedliche Wellenlängenbereiche zu detektieren. Mithilfe von arrayförmig angeordneten Detektorelementen lassen sich wertvolle zusätzliche Informationen über eine Probe, etwa die Oberflächenbeschaffenheit der Probe, ermitteln.

Gemäß einer bevorzugten Weiterbildung der Spektrometervorrichtung weist die Detektoreinrichtung mindestens zwei gestapelte Detektorelemente auf, wobei die Detektorelemente jeweils für unterschiedliche Wellenlängenbereiche sensitiv sind. Hierunter können insbesondere Detektorelemente verstanden werden, welche für Wellenlängenbereiche sensitiv sind, welche sich nicht überlappen. Eine teilweise Überlappung der Wellenlängenbereiche ist jedoch ebenfalls möglich.

Erfindungsgemäss ist das optische Interferenzfilter als Fabry-Pérot-Interferenzfilter ausgebildet.

Gemäß einer bevorzugten Weiterbildung der Spektrometervorrichtung umfasst die Detektoreinrichtung mindestens eine Fotodiode, insbesondere eine InGaAs-Fotodiode, eine Si-Fotodiode, eine Ge-Fotodiode, eine ExInGaAs-Fotodiode oder einen Quantenpunkt-Detektor.

### Kurze Beschreibung der Zeichnungen

Es zeigen:
- Figur 1: eine schematische Querschnittsansicht einer Spektrometervorrichtung gemäß einer ersten Ausführungsform der Erfindung;
- Figur 2: eine schematische Querschnittsansicht einer Spektrometervorrichtung gemäß einer zweiten Ausführungsform der Erfindung;
- Figur 3: eine schematische Querschnittsansicht einer Spektrometervorrichtung gemäß einer dritten Ausführungsform der Erfindung;
- Figur 4: eine schematische Querschnittsansicht einer Spektrometervorrichtung gemäß einer vierten Ausführungsform der Erfindung; und
- Figur 5: ein Flussdiagramm zur Erläuterung eines Verfahrens zum Herstellen einer Spektrometervorrichtung gemäß einer Ausführungsform der Erfindung.

In allen Figuren sind gleiche bzw. funktionsgleiche Elemente und Vorrichtungen mit denselben Bezugszeichen versehen. Die Nummerierung von Verfahrensschritten dient der Übersichtlichkeit und soll im Allgemeinen keine bestimmte zeitliche Reihenfolge implizieren. Insbesondere können auch mehrere Verfahrensschritte gleichzeitig durchgeführt werden.

### Beschreibung der Ausführungsbeispiele

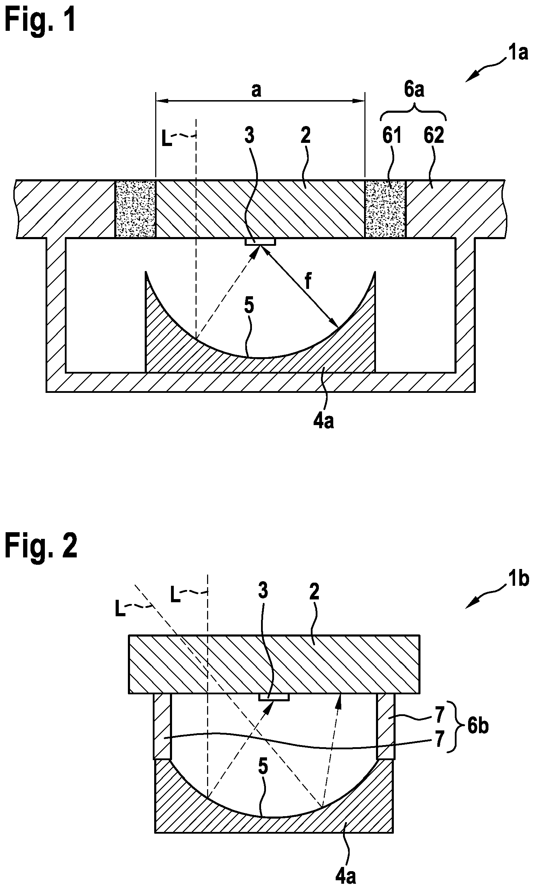

Figur 1 zeigt eine schematische Querschnittsansicht einer Spektrometervorrichtung 1a, welche eine Trägervorrichtung 6a aufweist, welche wiederum ein Substrat 61 umfasst, in welches ein optisches Interferenzfilter 2 bzw. spektrales Element integriert ist. Die Trägervorrichtung 6a umfasst weiter Halteelemente 62, welche eine Fokussiereinrichtung 4a halten.

Bei dem optischen Interferenzfilter 2 handelt es sich um ein vorzugsweise mikromechanisch hergestelltes Fabry-Pérot-Interferenzfilter. Das optische Interferenzfilter umfasst zwei relativ zueinander beabstandete und relativ zueinander aktuierbare Spiegel. Je nach Einfallswinkel der Lichtstrahlen L auf das optische Interferenzfilter 2 werden Lichtstrahlen L mit einer sich leicht unterscheidenden Zentralwellenlänge durchgelassen. Die Zentralwellenlänge hängt darüber hinaus von dem Abstand der beiden Spiegel zueinander ab. Vorzugsweise weist das optische Interferenzfilter 2a eine einseitige oder besonders bevorzugt beidseitige Verkapselung auf. Gemäß weiteren Ausführungsformen sind jedoch auch optische Interferenzfilter 2 anderer Bauart und Wirkweise möglich.

An einer Lichtaustrittsseite des optischen Interferenzfilters 2 ist in mittiger Position eine Detektoreinrichtung 3 angeordnet. Die Detektoreinrichtung 3 ist direkt mit dem optischen Interferenzfilter 2 verbunden, etwa durch eine Klebeverbindung oder eine Bondverbindung. Die Detektoreinrichtung 3 kann beispielsweise auf einer Kappe des optischen Interferenzfilters 2 angebracht sein. Die Detektoreinrichtung 3 kann mindestens eine Fotodiode als Detektorelement aufweisen, welche in Abhängigkeit der Intensität der einfallenden Lichtstrahlen L einen Fotostrom erzeugt, welcher gemessen und weiter ausgewertet werden kann. Die Spektrometervorrichtung la kann in Abhängigkeit des Fotostroms ein Messsignal ausgegeben. Gemäß weiteren Ausführungsformen kann die Detektoreinrichtung 3 eine Vielzahl von Detektorelementen aufweisen, welche vorzugsweise bei verschiedenen Wellenlängen sensitiv sind. Weiter kann ein Ringdetektor vorgesehen sein, welcher symmetrisch um die Mitte der Eingangsapertur des optischen Interferenzfilters 2, d.h. um eine Achse durch das Zentrum des optischen Interferenzfilters 2 herum angeordnet ist. Weiter kann die Detektoreinrichtung 3 mindestens ein segmentiertes Detektorelement aufweisen. Durch die Verwendung von Ringdetektoren oder segmentierten Detektorelementen können mehrere Winkelintervalle und/oder unterschiedliche Wellenlängenbereiche detektiert werden. Zum Erfassen unterschiedlicher Wellenlängenbereiche kann die Detektoreinrichtung 3 auch gestapelte Detektoren, d.h. Dualdetektoren aufweisen. Das Material der Detektorelemente der Detektoreinrichtung 3 kann beispielsweise Silizium Si, Indiumgalliumarsenid InGaAs, Germanium Ge oder Bleiselenid PbSe umfassen. Weiter sind auf Quantenpunkten basierende Detektormaterialen möglich oder Dualdetektoren mit InGaAs+Si Materialkombinationen. Neben Einzeldetektoren kann die Detektoreinrichtung 3 auch Arraydetektoren umfassen. Weiter kann die Detektoreinrichtung 3 zusätzliche Abbildungsoptiken umfassen.

Die Fokussiereinrichtung 4a ist als Parabolspiegel mit Brennweite f ausgestaltet. Die Detektoreinrichtung ist in der Mitte der Eingangsapertur des optischen Interferenzfilters 2, d.h. im Fokuspunkt der symmetrisch ausgestalteten Fokussiereinrichtung 4a angeordnet, d.h. die Fokussiereinrichtung 4a fokussiert Lichtstrahlen L, welche durch das optische Interferenzfilter 2 hindurch treten und deren Einfallswinkel einen vorgegebenen Schwellenwert nicht überschreitet, auf die Detektoreinrichtung 3. Lichtstrahlen L mit einem höheren Einfallswinkel werden in einen Bereich neben der Detektoreinrichtung 3 abgelenkt. Bevorzugt ist in diesem Bereich neben der Detektoreinrichtung 3 auf der Rückseite bzw. Lichtaustrittsseite des optischen Interferenzfilters 2 eine Beschichtung aus einem absorbierenden Material aufgebracht, welches die Lichtstrahlen L absorbiert. Die Fokussiereinrichtung 4a kann eine Beschichtung mit einem reflektierenden Material, insbesondere Silber, Gold oder Aluminium aufweisen. Zusätzlich kann mindestens eine Schutzschicht vorgesehen sein. Insbesondere kann die Fokussiereinrichtung 4a als beschichtetes oder bedampftes Spritzgussteil ausgebildet sein. Gemäß weiteren Ausführungsformen kann die Fokussiereinrichtung 4a gedrehte oder gefräste Teile, insbesondere aus Aluminium umfassen. Die Fokussiereinrichtung 4a kann anstelle oder zusätzlich zu reflektierenden fokussierenden Spiegeln auch weitere reflektierende optische Komponenten wie reflektierende sogenannte Metasurfaces umfassen.

In Abhängigkeit der nutzbaren Apertur a des optischen Interferenzfilters 2 bzw. des nutzbaren Durchmessers der Fokussiereinrichtung 4a, der Brennweite der Fokussiereinrichtung f und der Größe des sensitiven Bereichs der Detektoreinrichtung 3 wird das detektierbare Einfallswinkelintervall eingeschränkt und somit die Auflösung der Spektrometervorrichtung 1a eingestellt bzw. optimiert.

Figur 2 zeigt eine Spektrometervorrichtung 1b, welche eine Abwandlung einer oben beschriebenen Spektrometervorrichtung 1a darstellt und sich in der Ausgestaltung der Trägereinrichtung 6b unterscheidet. Demnach umfasst die Trägereinrichtung 6b Beabstandungselemente 7, welche die Fokussiereinrichtung 4a mit dem optischen Interferenzfilter 2 verbinden und diese Elemente voneinander beabstandet. Die Trägereinrichtung 6b kann insbesondere zylinderförmig ausgestaltet sein. Die Beabstandungselemente 7 weisen vorzugsweise auf ihrer Innenseite eine absorbierende Beschichtung auf, welche mögliches Streulicht absorbiert. Bei den Beabstandungselementen 7 kann es sich um eine zusätzliche Schicht bzw. einen Schichtstapel handeln oder um ein über eine Klebeverbindung oder eine Bondverbindung verbundenes Element, etwa einen Wafer. Gemäß weiteren Ausführungsformen kann das Fokussierelement 4a direkt mit dem optischen Interferenzfilter 2 verbunden sein, etwa über eine Klebeverbindung bzw. Bondverbindung.

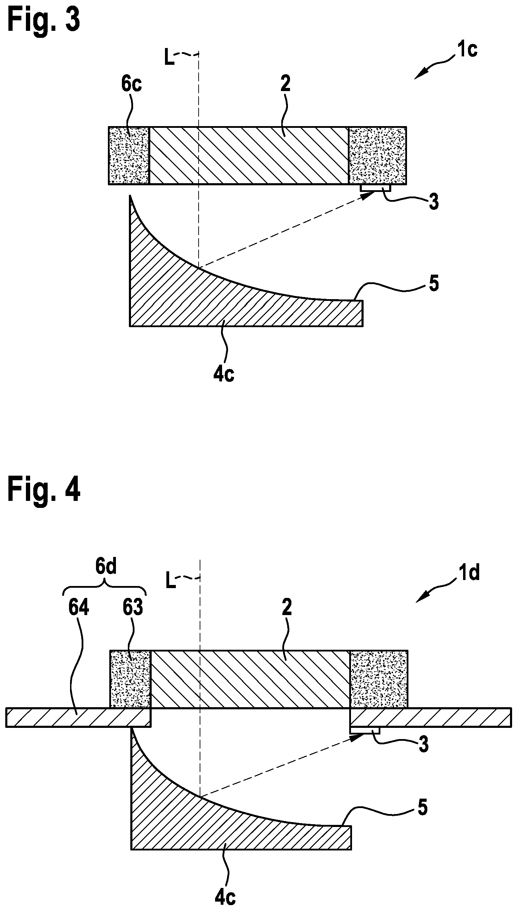

Figur 3 zeigt eine weitere Spektrometervorrichtung 1c, welche eine Abwandlung der oben beschriebenen Spektrometervorrichtungen 1a, 1b darstellt. Die Trägereinrichtung 6c kann einer der oben beschriebenen Trägereinrichtungen 6a, 6b entsprechen. Im Unterschied zu den oben abgebildeten Spektrometervorrichtungen 1a, 1b ist die Fokussiereinrichtung 4c asymmetrisch, beispielweise als sogenannter Off-Axis-Reflektor, ausgestaltet, d.h. der Brennpunkt der Fokussiereinrichtung 4c liegt nicht im Zentrum des optischen Interferenzfilters 2 sondern in einem Bereich außerhalb des optischen Interferenzfilters 2. Entsprechend ist die Detektoreinrichtung 3 an der Trägereinrichtung 6c außerhalb des optischen Interferenzfilters 2 an einer der Fokussiereinrichtung 4c zugewandten Seite angeordnet, wobei die Fokussiereinrichtung 4c den Lichtstrahl L nach dem Durchgang durch das optische Interferenzfilter 2 auf die Detektoreinrichtung 3 fokussiert. Indem die Detektoreinrichtung 3 neben dem optischen Interferenzfilter 2 angeordnet ist, können Abschattungen durch die Detektoreinrichtung 3 sowie durch Zuleitungen der Detektoreinrichtung 3 vermieden werden, was insbesondere bei kleineren Eingangsaperturen trotz des aufgrund der schlechteren Lichteffizienz oder der größeren Bauhöhe schlechteren Verhältnisses von Eingangsapertur a zu Brennweite f sowie den erhöhten Reflexionsverlusten bei der Lichteinkopplung in die Detektoreinrichtung 3 dennoch vorteilhaft sein kann.

Figur 4 zeigt eine Querschnittsansicht einer weiteren Spektrometervorrichtung 1d, welche eine Abwandlung der in Figur 3 gezeigten Spektrometervorrichtung 1c ist. Das Trägerelement 6d weist gemäß dieser Ausführungsform eine Hausung 63 des optischen Interferenzfilters 2 sowie eine Trägerplatte 64 auf, wobei die Detektoreinrichtung 3 an einer der symmetrischen Fokussiereinrichtung 4c zugewandten Seite der Trägerplatte 64 angeordnet ist.

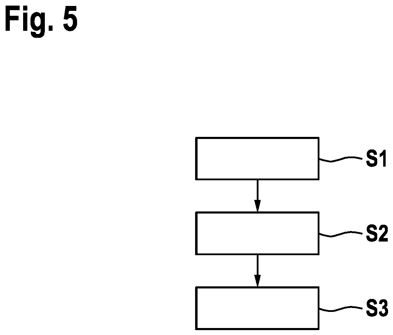

In Figur 5 ist ein Flussdiagramm eines Verfahrens zum Herstellen einer Spektrometervorrichtung, insbesondere einer der oben beschriebenen Spektrometervorrichtungen 1a, 1b, 1c, 1d illustriert.

In einem ersten Schritt S1 wird ein optisches Interferenzfilter 2 bereitgestellt, wobei es sich bei dem optischen Interferenzfilter 2 um ein Interferenzfilter für ein Fabry-Pérot-Interferometer handelt. Das optische Interferenzfilter 2 wird derart ausgestaltet, dass bestimmte Wellenlängenbereiche eines einfallenden Lichtstrahls L beim Durchgang durch das optische Interferenzfilter 2 gefiltert werden.

In einem weiteren Verfahrensschritt S2 wird eine Detektoreinrichtung 3 bereitgestellt, welche dazu ausgebildet ist, den gefilterten Lichtstrahl L zu detektieren. Insbesondere können das optische Interferenzfilter 2 und die Detektoreinrichtung 3 an einer gemeinsamen Trägereinrichtung 6 angeordnet werden. Die Detektoreinrichtung 3 kann auch direkt an dem optischen Interferenzfilter 2 angeordnet werden, gegebenenfalls mittels zusätzlicher Zwischenschichten.

In einem Verfahrensschritt S3 wird eine Fokussiereinrichtung 4a, 4c bereitgestellt, welche eine reflektierende Oberfläche 5 aufweist. Die Fokussiereinrichtung 4a, 4c kann symmetrisch oder asymmetrisch ausgestaltet sein, wobei die Anordnung von Fokussiereinrichtung 4a, 4c, Detektoreinrichtung 3 und optischem Interferenzfilter 2 derart erfolgt, dass ein von dem optischen Interferenzfilter 2 gefilterter Lichtstrahl L mittels der Fokussiereinrichtung 4a, 4c auf die Detektoreinrichtung 3 fokussiert wird.

Die Verfahrensschritte S1, S2, S3 können in beliebiger Reihenfolge und insbesondere auch gleichzeitig durchgeführt werden.

## Patentansprüche

1. Spektrometervorrichtung (1a; 1b; 1c; 1d), mit:
einem optischen Interferenzfilter (2), das zwei relativ zueinander beabstandete und relativ zueinander aktuierbare Spiegel umfasst und welches dazu ausgebildet ist, bestimmte Wellenlängenbereiche eines einfallenden Lichtstrahls (L) beim Durchgang durch das optische Interferenzfilter (2) zu filtern, wobei das optische Interferenzfilter (2) als Fabry-Pérot-Interferenzfilter ausgebildet ist;
einer Detektoreinrichtung (3), welche dazu ausgebildet ist, den gefilterten Lichtstrahl (L) zu detektieren und welche auf einer Lichtaustrittsseite des Interferenzfilters (2) in das Interferenzfilter (2) integriert oder direkt oder über zusätzliche Schichten an dem Interferenzfilter (2) angeordnet ist; unc
einer Fokussiereinrichtung (4a; 4c) mit einer reflektierenden Oberfläche (5), wobei die Fokussiereinrichtung (4a; 4c) dazu ausgebildet ist, den gefilterten Lichtstrahl (L) durch Reflexion an der Oberfläche (5) auf die Detektoreinrichtung (3) zu fokussieren einer Trägereinrichtung (6a; 6b; 6c; 6d), wobei das optische Interferenzfilter (2), die
Detektoreinrichtung (3) und die Fokussiereinrichtung (4a; 4c) direkt oder mittelbar an der Trägereinrichtung (6a; 6b; 6c; 6d) angeordnet sind.

2. Spektrometervorrichtung (1a; 1b) gemäß Anspruch 1, wobei die Detektoreinrichtung (3) zumindest teilweise mit einer durch ein Zentrum des optischen Interferenzfilters (2) verlaufenden Achse (A) überlappt.

3. Spektrometervorrichtung (1c; 1d) gemäß Anspruch 1 oder 2, wobei die Detektoreinrichtung (3) auf einer Lichtaustrittsseite des optischen Interferenzfilters (2) benachbart zu dem Interferenzfilter (2) an der Trägereinrichtung (6c; 6d) angeordnet ist.

4. Spektrometervorrichtung (1b) gemäß Anspruch 1 bis 3, wobei die Trägereinrichtung (6b) mindestens ein Beabstandungselement (7) umfasst, welches die Fokussiereinrichtung (4a) mit dem optischen Interferenzfilter (2) verbindet und diese voneinander beabstandet, wobei das mindestens eine Beabstandungselement (7) zumindest bereichsweise eine absorbierende Beschichtung zur Verringerung von Quer- und Rückstrahlung aufweist.

5. Spektrometervorrichtung (1a; 1b; 1c; 1d) gemäß einem der Ansprüche 1 bis 4, wobei ein Oberflächenabschnitt der Detektoreinrichtung (3) und/oder ein der Detektoreinrichtung (3) benachbarter Oberflächenabschnitt des Interferenzfilters (2) und/oder der Trägereinrichtung (6a; 6b; 6c; 6d) zumindest bereichsweise eine absorbierende Beschichtung zur Verringerung von Quer- und Rückstrahlung aufweist.

6. Spektrometervorrichtung (1a; 1b; 1c; 1d) gemäß einem der vorangehenden Ansprüche, wobei die Detektoreinrichtung (3) einen Ringdetektor, segmentierte Detektorelemente und/oder arrayförmig angeordnete Detektorelemente aufweist.

7. Spektrometervorrichtung (1a; 1b; 1c; 1d) gemäß einem der vorangehenden Ansprüche, wobei die Detektoreinrichtung (3) mindestens zwei gestapelte Detektorelemente aufweist, welche für unterschiedliche Wellenlängenbereiche sensitiv sind.

8. Verfahren zum Herstellen einer Spektrometervorrichtung (1a; 1b; 1c; 1d) nach einem der vorangehenden Ansprüche, mit den Schritten:
Bereitstellen (S1) eines optischen Interferenzfilters (2), welches dazu ausgebildet ist, bestimmte Wellenlängenbereiche eines einfallenden Lichtstrahls (L) beim Durchgang durch das optische Interferenzfilter (2) zu filtern;
Bereitstellen (S2) einer Detektoreinrichtung (3), welche dazu ausgebildet ist, den gefilterten Lichtstrahl (L) zu detektieren; und
Bereitstellen (S3) einer Fokussiereinrichtung (4a; 4c) mit einer reflektierenden Oberfläche (5), wobei die Fokussiereinrichtung (4a; 4c), die Detektoreinrichtung (3) und das optische Interferenzfilter (2) derart zueinander angeordnet werden, dass die Fokussiereinrichtung (4a; 4c) den gefilterten Lichtstrahl (L) auf die Detektoreinrichtung (3) fokussieren kann.

## Claims

1. Spectrometer apparatus (1a; 1b; 1c; 1d), having:
an optical interference filter (2), which comprises two mirrors spaced apart relative to one another and actuable relative to one another and which is configured to filter particular wavelength ranges of an incident light beam (L) as it passes through the optical interference filter (2), wherein the optical interference filter (2) is configured as a Fabry-Pérot interference filter;
a detector device (3), which is configured to detect the filtered light beam (L) and which is integrated into the interference filter (2), or arranged directly or by way of additional layers on the interference filter (2), on a light exit side of the interference filter (2); and
a focusing device (4a; 4c) having a reflective surface (5), wherein the focusing device (4a; 4c) is configured to focus the filtered light beam (L) onto the detector device (3) by reflection at the surface (5); and a carrier device (6a; 6b; 6c; 6d), wherein the optical interference filter (2), the detector device (3) and the focusing device (4a; 4c) are arranged directly or indirectly on the carrier device (6a; 6b; 6c; 6d).

2. Spectrometer apparatus (1a; 1b) according to Claim 1, wherein the detector device (3) at least partially overlaps an axis (A) extending through a centre of the optical interference filter (2).

3. Spectrometer apparatus (1c; 1d) according to Claim 1 or 2, wherein the detector device (3) is arranged adjacent to the interference filter (2) on the carrier device (6c; 6d) on a light exit side of the optical interference filter (2).

4. Spectrometer apparatus (1b) according to Claims 1 to 3, wherein the carrier device (6b) comprises at least one spacer element (7), which connects the focusing device (4a) to the optical interference filter (2) and spaces them apart from one another, wherein the at least one spacer element (7) at least regionally has an absorbent coating for reducing transverse and back radiation.

5. Spectrometer apparatus (1a; 1b; 1c; 1d) according to any of Claims 1 to 4, wherein a surface section of the detector device (3) and/or a surface section, adjacent to the detector device (3), of the interference filter (2) and/or of the carrier device (6a; 6b; 6c; 6d) at least regionally has an absorbent coating for reducing transverse and back radiation.

6. Spectrometer apparatus (1a; 1b; 1c; 1d) according to any of the preceding claims, wherein the detector device (3) comprises a ring detector, segmented detector elements and/or detector elements arranged so as to form an array.

7. Spectrometer apparatus (1a; 1b; 1c; 1d) according to any of the preceding claims, wherein the detector device (3) comprises at least two stacked detector elements, which are sensitive to different wavelength ranges.

8. Method for producing a spectrometer apparatus (1a; 1b; 1c; 1d) according to any of the preceding claims, having the following steps:
providing (S1) an optical interference filter (2), which is configured to filter particular wavelength ranges of an incident light beam (L) as it passes through the optical interference filter (2);
providing (S2) a detector device (3), which is configured to detect the filtered light beam (L); and
providing (S3) a focusing device (4a; 4c) having a reflective surface (5), wherein the focusing device (4a; 4c), the detector device (3) and the optical interference filter (2) are arranged with respect to one another in such a way that the focusing device (4a; 4c) can focus the filtered light beam (L) onto the detector device (3).

## Revendications

1. Dispositif de spectrométrie (1a ; 1b ; 1c ; 1d), comprenant :
un filtre d'interférence optique (2) qui comprend deux miroirs espacés l'un par rapport à l'autre et pouvant être actionnés l'un par rapport à l'autre, et qui est réalisé pour filtrer certaines plages de longueurs d'onde d'un faisceau lumineux incident (L) lors du passage à travers le filtre d'interférence optique (2), le filtre d'interférence optique (2) étant réalisé sous forme d'interféromètre de Fabry-Pérot ;
un équipement de détection (3) qui est réalisé pour détecter le faisceau lumineux filtré (L) et qui est intégré dans le filtre d'interférence (2) sur un côté de sortie de lumière du filtre d'interférence (2) ou est disposé directement ou par l'intermédiaire de couches supplémentaires sur le filtre d'interférence (2) ; et
un équipement de focalisation (4a ; 4c) pourvu d'une surface réfléchissante (5), dans lequel l'équipement de focalisation (4a ; 4c) est réalisé pour focaliser le faisceau lumineux filtré (L) par réflexion à la surface (5) sur l'équipement de détection (3), un équipement de support (6a ; 6b ; 6c ; 6d), dans lequel le filtre d'interférence optique (2), l'équipement de détection (3) et l'équipement de focalisation (4a ; 4c) sont disposés directement ou indirectement sur l'équipement de support (6a ; 6b ; 6c ; 6d).

2. Dispositif de spectrométrie (1a ; 1b) selon la revendication 1, dans lequel l'équipement de détection (3) se chevauche au moins partiellement avec un axe (A) s'étendant à travers un centre du filtre d'interférence optique (2).

3. Dispositif de spectrométrie (1c ; 1d) selon la revendication 1 ou 2, dans lequel l'équipement de détection (3) est disposé sur un côté de sortie de lumière du filtre d'interférence optique (2) de manière adjacente au filtre d'interférence (2) sur l'équipement de support (6c ; 6d).

4. Dispositif de spectrométrie (1b) selon la revendication 1 à 3, dans lequel l'équipement de support (6b) comprend au moins un élément d'espacement (7) qui relie l'équipement de focalisation (4a) au filtre d'interférence optique (2) et les espace l'un par rapport à l'autre, dans lequel ledit au moins un élément d'espacement (7) présente au moins par endroits un revêtement absorbant pour diminuer le rayonnement transversal et la réflexion.

5. Dispositif de spectrométrie (1a ; 1b ; 1c ; 1d) selon l'une quelconque des revendications 1 à 4, dans lequel une partie de surface de l'équipement de détection (3) et/ou une partie de surface du filtre d'interférence (2), adjacente à l'équipement de détection (3), et/ou de l'équipement de support (6a ; 6b ; 6c ; 6d) présente(nt) au moins par endroits un revêtement absorbant pour diminuer le rayonnement transversal et la réflexion.

6. Dispositif de spectrométrie (1a ; 1b ; 1c ; 1d) selon l'une quelconque des revendications précédentes, dans lequel l'équipement de détection (3) présente un détecteur annulaire, des éléments de détection segmentés et/ou des éléments de détection agencés sous forme de matrice.

7. Dispositif de spectrométrie (1a ; 1b ; 1c ; 1d) selon l'une quelconque des revendications précédentes, dans lequel l'équipement de détection (3) présente au moins deux éléments de détection empilés qui sont sensibles à différentes plages de longueurs d'onde.

8. Procédé permettant de fabriquer un dispositif de spectrométrie (1a ; 1b ; 1c ; 1d) selon l'une quelconque des revendications précédentes, comprenant les étapes consistant à :
fournir (S1) un filtre d'interférence optique (2) qui est réalisé pour filtrer certaines plages de longueurs d'onde d'un faisceau lumineux incident (L) lors du passage à travers le filtre d'interférence optique (2) ;
fournir (S2) un équipement de détection (3) qui est réalisé pour détecter le faisceau lumineux filtré (L) ; et
fournir (S3) un équipement de focalisation (4a ; 4c) pourvu d'une surface réfléchissante (5), dans lequel l'équipement de focalisation (4a ; 4c), l'équipement de détection (3) et le filtre d'interférence optique (2) sont disposés les uns par rapport aux autres de telle sorte que l'équipement de focalisation (4a ; 4c) peut focaliser le faisceau lumineux filtré (L) sur l'équipement de détection (3).
